# EUROPÄISCHE PATENTSCHRIFT

(11) **EP 0 744 265 B1**
(45) Veröffentlichungstag und Bekanntmachung des Hinweises auf die Patenterteilung: **14.08.2002**
(21) Anmeldenummer: 96107678.3
(22) Anmeldetag: 14.05.1996
(51) Int. Cl.: B29C 45/17

(54) **Verfahren zum Spritzgiessen hohlgeblasener Kunststoffkörper**
Method for injection moulding hollow blown plastic bodies
Procédé pour mouler par injection des corps creux soufflés en matière plastique

(30) Priorität: 23.05.1995 DE 19518964
(43) Veröffentlichungstag der Anmeldung: 27.11.1996
(73) Patentinhaber: ELDRA KUNSTSTOFFTECHNIK GMBH, D-84137 Vilsbiburg (DE)
(72) Erfinder: Gotterbauer, Klaus, 84186 Vilsheim / Langenvils (DE)
(74) Vertreter: Kohlmann, Karl Friedrich, Dipl.-Ing.

(56) Entgegenhaltungen:
- WO-A-94/08773
- DE-A- 3 913 109
- FR-A- 2 115 488
- US-A- 5 204 050
- KUNSTSTOFFE, Bd. 83, Nr. 7, Juli 1993, MUNCHEN, Seiten 505-517, XP000372679 P.EYERER ET AL: "spritzgiessen mit gasinnendruck"

## Beschreibung

Die Erfindung betrifft ein Verfahren zum Spritzgießen hohlgeblasener Kunststoffkörper, bei dem die an sich bekannte Gasinnendrucktechnik verwendet wird.

Unter einem Gasinnendruckverfahren (GID-Verfahren) wird ein Verfahren verstanden, bei dem ein Gas, meistens Stickstoff, in einen mit Kunststoffschmelze gefüllten Formhohlraum injiziert wird und Schmelze durch den Gasdruck von ca. 25 bis 300 bar unter Bildung eines Gaskanals verdrängt wird. Gemäß der Veröffentlichung "Spritzgießen mit Gasinnendruck", P. Eyerer, R. Märtins, Stuttgart und E. Bürkle, München, Zeitschrift "Kunststoffe", Carl Hansa Verlag, München 1993, wird zwischen einem Standard-Gasinnendruck-Verfahren und einem Gasinnendruck-Sonderverfahren unterschieden.

Beim sog. Standard-Gasinnendruck-Verfahren erfolgt zunächst eine Teilfüllung einer Kavität, das heißt eines Formhohlraumes, mit Kunststoffschmelze. Für die Restfüllung wird Gas eingeleitet. Das bedeutet, daß zuerst die Kavität mit einer genau definierten Menge Kunststoffschmelze teilgefüllt wird. Das dazu nötige Volumen muß vorab empirisch ermittelt werden, um einerseits ein Durchblasen der Fließfront durch das Gas zu vermeiden und andererseits ein ideales Gasblasvolumen sicherzustellen. Gleichzeitig oder nachfolgend wird Gas in das Innere des Formteiles (plastische Seele) eingeleitet, wobei es über ein Anguß- und ein Verteilersystem (mit Maschinendüse) oder im Werkzeug mit Hilfe von Werkzeugdüsen zugeführt wird. Das Gas verdrängt dabei die Schmelze aus der plastischen Seele zum Fließwegende, bis der Rest der Kavität vollständig gefüllt ist. Zu welchem Zeitpunkt das Gas tatsächlich das plastische Material im Formteilinneren verdrängen kann, hängt von physikalischen Vorgängen in der Düse und im Formteil ab.

Nach dem Verdrängungsprozeß wirkt der Gasdruck im gebildeten Hohlraum des Formteiles als sog. Nachdruck zum Schwindungsausgleich, bis das Formteil so weit abgekühlt ist, daß es entformt werden kann.

Vor der Entformung ist es allerdings notwendig, den Gasdruck im Formteilinneren abzubauen, da sonst beim öffnen des Werkzeuges der Hohlkörper aufplatzt. Dies kann durch geeignete Gasrückführung und/oder Druckentlastung in die Umgebung erfolgen.

Beim GID-Sonderverfahren wird im Gegensatz zum Standard-Gasinnendruck-Verfahren die Kavität vollständig mit Schmelze gefüllt. Dann erfolgt das sogenannte Masserückdrücken. Unter Masserückdrücken versteht man das Zurückschieben der plastischen Seele der Schmelze aus dem Formteil über die sogenannten Verdrängerdüsen in die Plastifiziereinheit der Spritzgußmaschine mit Hilfe von Gasdruck. Abhängig von der Formteilgeometrie wirkt dabei der Massenachdruck zum Schwindungsausgleich der verbliebenen dünnen Wandstärké. Die Position der Schnecke der Plastifiziereinheit nach dem Zurückschieben ist ein Maß für die Länge des Gaskanales. Nach dem Zurückschieben der Schmelze und Verschließen der Verdrängerdüsen wird der Gasdruck zum Schwindungsausgleich und zur intensiven Kühlung zwischen Formteiloberfläche und Werkzeugwand angehoben. Anschließend muß ähnlich dem Standard-Gasinnendruck-Verfahren eine Gasrückführung bzw. Druckentlastung durchgeführt werden, um das Formteil entformen zu können.

Bisher konnten diese Gasinnendruckverfahren nur bei einfachen Formteilgeometrien angewendet werden. Bei komplizierteren Formteilgeometrien mußte bisher das beim Verdrängen der schmelzflüssigen Seele in einem Formhohlraum ausgetriebene Material in eine oder mehrere, im Werkzeug vorgesehene, im Formteil entformbare Nebenkavitäten eingeleitet werden.

Ein Verfahren und eine Vorrichtung zum Spritzgießen fluidgefüllter Kunststoffkörper, bei dem die schmelzflüssige Seele in eine Nebenkavität ausgetrieben wird, ist aus der DE 39 13 109 C2 bekannt. Bei diesem bekannten Verfahren wird der Formhohlraum zunächst vollständig mit Kunststoffschmelze ausgefüllt und nach dem Einsetzen des Erstarrens der Kunststoffschmelze an den Wänden des Formhohlraums die noch schmelzflüssige Seele des Kunststoffkörpers mittels eines Fluids in mindestens eine außerhalb des Formhohlraums angeordnete und mit diesem verbundene entformbare Nebenkavität ausgetrieben.

Bei diesem bekannten Verfahren ist es normalerweise notwendig, die Nebenkavität mit einem Schieber zu verschließen, die dann vor der Gaseinleitung und Verdrängung der Schmelze, z.B. pneumatisch oder hydraulisch, geöffnet wird.

Die WO 94/08773 beschreibt ein Gasinnendruckverfahren, bei dem zwei Gasblasen aufeinander zugeführt werden. Es wird eine vorbestimmte, ausreichende Menge an Kunststoffschmelze in den Formhohlraum eingespritzt und über einen weiteren Kanal ein fluidisches Druckmedium eingebracht. Dadurch entsteht eine Druckmedienblase, die sich in Richtung gegenüberliegender Abzweigungen des Formhohlraums ausweitet. Innerhalb dieser Abzweigungen sind weitere Kanäle vorgesehen, durch die ein weiteres Druckmedium eingebracht wird.

Das der Erfindung zugrundliegende technische Problem besteht darin, eine Verfahrensweise and eine Vorrichtung zu schaffen, bei der auch bei komplizierteren Formteilgeometrien mit beispielsweise Querverbindungen keine oder zumindest weniger Nebenkavitäten erforderlich sind als bisher.

Dieses technische Problem wird durch ein Verfahren zum Spritzgießen hohlgeblasener Kunststoffkörper gelöst, bei dem ein durch ein Werkzeug gebildeter, aus zumindest einem Hauptund einem Nebenformhohlraum bestehender Formhohlraum mit einer druckbeaufschlagten fließfähigen Kunststoffschmelze vollständig gefüllt wird and gleichzeitig oder nach Einsetzen des Erstarrens der Kunststoffschmelze an den Wänden des Formhohlraums in dem Hauptformhohlraum ein druckbeaufschlagtes Fluid eingebracht und dabei die fließfähige Seele der Kunststoffschmelze aus diesem Hauptformhohlraum ausgetrieben wird. Danach wird in den Nebenformhohlraum ein druckbeaufschlagtes Fluid eingebracht, durch das die fließfähige Seele der Kunststoffschmelze aus dem Nebenformhohlraum in den Hauptformhohlraum ausgetrieben wird, wo sich das noch fließfähige Material an den bereits erstarrten Wanden des Hauptformhohlraums absetzt.

In einem ersten Verfahrensschritt wird das erfindungsgemäße Verfahren im Gasinnendruck-Sonderverfahren betrieben werden. Das bedeutet, daß zuerst der gesamte Formhohlraum vollständig mit Kunststoffschmelze ausgefüllt wird, bevor gleichzeitig oder nach Einsetzen des Erstarrens der Kunststoffschmelze an den Wänden des Formhohlraumes ein druckbeaufschlagtes Fluid in den Formhohlraum eingebracht wird, wodurch die schmelzflüssige Seele im Hauptformhohlraum in die Plastifiziereinheit der Spritzgußmaschine zurückgedrängt wird.

Der Erfindung liegt der Gedanke zugrunde, die schmelzflüssige Seele aus einem mit dem Hauptformhohlraum verbundenen Nebenformhohlraum dann mittels eines Fluids auszutreiben, wenn bereits in dem Hauptformhohlraum ein Gaskanal mittels der an sich bekannten Gasinnendrucktechnik erstellt wurde. Durch das erfindungsgemäße Verfahren kann erstmals für einen derartigen Nebenformhohlraum auf eine Nebenkavität vollständig verzichtet oder bei komplizierten Geometrien zumindest die Anzahl der Nebenkavitäten erheblich verringert werden, indem das Material der schmelzflüssigen Seele des Nebenformhohlraums in den zuvor erstellten Gaskanal des Hauptformhohlraums gedrückt wird and sich dort absetzt. Durch diese erfindungsgemäße Verfahrensweise erübrigen sich zum einen Nebenkavitäten für die Nebenformhohlraume und die dazugehörigen Verschlußmechaniken. Zum anderen kann ein kleineres and kostengünstigeres Werkzeug geschaffen werden. Außerdem ist erstmals keine Nacharbeit bei einem Formteil mit einer komplizierteren Geometrie notwendig, die ansonsten durch Entfernen der Nebenkavität bzw. dessen Ansatzstück notwendig ist. Zudem kann durch Volumenverringerung die erforderliche Gasmenge reduziert werden.

Bei dem erfindungsgemäßen Verfahren können als Fluid Gase und Flüssigkeiten zum Austreiben der schmelzflüssigen Seele in den Haupt- oder Nebenformhohlraum eingespritzt werden. Insbesondere ist es vorteilhaft, Stickstoff zu verwenden.

Zur Durchführung des Verfahrens wird eine Vorrichtung erfindungsgemäß verwendet, die mit einem durch ein Werkzeug gebildeten Formhohlraum, der aus zumindest einem Hauptformhohlraum und zumindest einem Nebenformhohlraum besteht, die miteinander verbunden sind, ausgestattet ist. Dabei ist zumindest eine Düse zum Einbringen einer druckbeaufschlagten fließfähigen Kunststoffschmelze in den Formhohlraum vorgesehen. Des weiteren ist zumindest eine weitere Düse zum Einbringen eines druckbeaufschlagten Fluids in den Hauptformhohlraum notwendig sowie eine weitere Düse zum Einbringen eines druckbeaufschlagten Fluids in den Nebenformhohlraum, nachdem die schmelzflüssige Seele im Hauptformhohlraum ausgetrieben ist.

Vorteilhafterweise wird in einem mehrteiligen Werkzeug zumindest ein sich längserstreckender Hauptformhohlraum and zumindest ein mit diesem Hauptformhohlraum verbundener, sich von diesem Hauptformhohlraum wegerstreckender Nebenformhohlraum gebildet. Dadurch können auch Mittelstege und komplizierte Formteilgeometrien erstmals in der Gasinnendrucktechnik vollständig ohne oder zumindest mit einer geringeren Anzahl von entformbaren Nebenkavitäten hergestellt werden.

Hierzu wird vorteilhafterweise an dem Nebenformhohlraum eine Gasdüse an dem der Verbindungsstelle an dem Hauptformhohlraum entgegengesetzten Ende angeordnet.

Indem zwei oder mehrere funktionell etwa parallel zueinanderliegende Hauptformhohlräume durch eine Anzahl von Nebenformhohlräumen miteinander verbunden sind, die durch das Werkzeug gebildet werden, und die Nebenformhohlräume im mittleren Bereich durch Trennwände unterteilt sind, wobei auf jeder Seite der Trennwand eine Gasdüse angeodnet ist, kann mit einfachen Mitteln die Anzahl von notwendigen Nebenkavitäten entweder auf Null oder zumindest stark reduziert werden.

Die in einem ersten Verfahrensschritt das erfindungsgemäße Verfahren im Gasinnendruck-Sonderverfahren betrieben wird, ist es vorteilhaft, daß an einem Ende des Hauptformhohlraums, das dem Ende mit der Düse zum Einbringen der Kunststoffschmelze gegenüberliegt, eine Gasinnendruckdüse angeordnet ist. Hierdurch wird erreicht, daß zum Austreiben der schmelzflüssigen Seele im Hauptformhohlraum das überschüssige Material in die Plastifiziereinheit der Spritzgußmaschine zurückgedrängt werden kann, und beim nächsten Spritzvorgang wiederverwendbar ist.

Im folgenden ist zur weiteren Erläuterung und zum besséren Verständnis ein Ausführungsbeispiel der Erfindung unter Bezugnahme auf die Zeichnungen näher erläutert und beschrieben. Es zeigt:
- Fig. 1: eine schematische Schnittdarstellung durch eine . Spritzgießmaschine und einem Werkzeug während dem Befüllen des Werkzeugs mit einer fließfähigen Kunststoffschmelze,
- Fig. 2: eine Schnittansicht gemäß der Fig. 1 nach Einsetzen des Erstarrens der Oberfläche des Kunststoffkörpers und während des Austreibens der schmelzflüssigen Seele aus den Hauptformhohlräumen zurück in die Schnecke der Spritzgußmaschine, und
- Fig. 3: eine Schnittansicht gemäß der Fig. 1 während des Austreibens der schmelzflüssigen Seele aus den weiteren Nebenformhohlräumen in die zuvor erstellten, in der Fig. 2 gezeigten Gaskanäle.

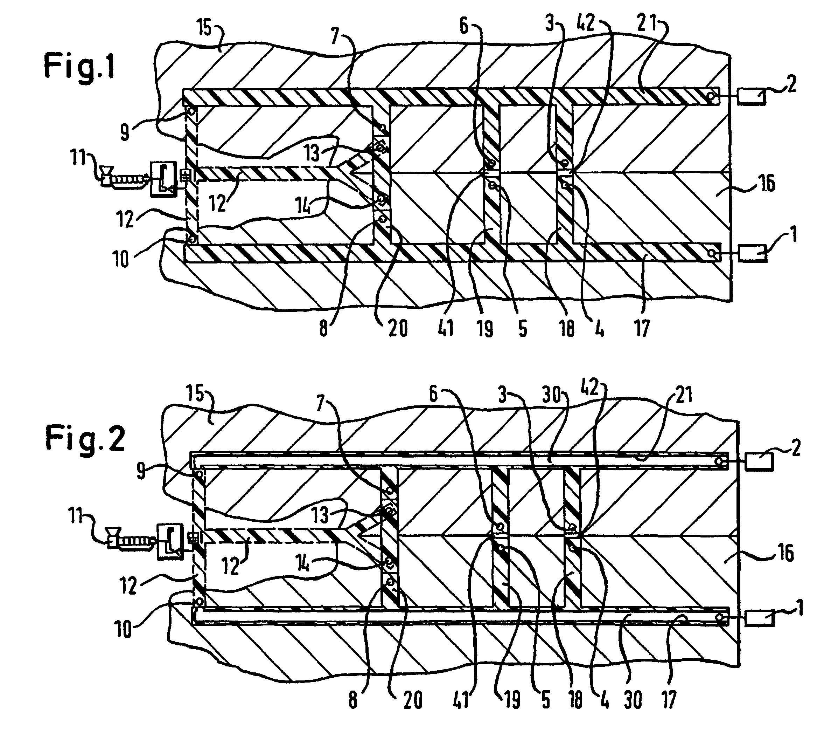

In der Fig. 1 ist ein Schnitt durch eine schematisch dargestellte Spritzgießmaschine 11 mit einem mehrteiligen Werkzeug 15, 16 gezeigt. Das Werkzeug 15, 16 bildet einen Formhohlraum, der sich aus mehreren Teilformhohlräumen 17 bis 21 zusammensetzt. Bei diesem Ausführungsbeispiel besteht der Formhohlraum aus zwei parallel zueinander liegenden voneinander beabstandeten Längshohlräumen 17, 21, die durch drei quer hierzu liegende Teilformhohlräumen 18, 19, 20 miteinander verbunden sind. Von der schematisch dargestellten Spritzgießmaschine 11 erstreckt sich ein Heißkanalverteiler 12 zu den Enden der Längshohlräume 17, 21 sowie zu einem Teilformhohlraum 20. An den gegenüberliegenden Enden der Längshohlräume 17, 21 sind jeweils Gasinnendruckdüsen 1, 2 angeordnet. Desgleichen sind Gasinnendrückdüsen 3 bis 6 im Mittelteil zweier quer zu den Längshohlräumen 17, 21 liegenden Teilformhohlräumen 18 und 19 angeordnet. Jeweils zwei Gasinnendruckdüsen 3, 4 und 5, 6 sind einem Teilformhohlraum zugeordnet. Bei diesem Ausführungsbeispiel sind zusätzlich Trennbleche 41, 42 jeweils in einem Teilformhohlraum 18, 19 angeordnet, die die Teilformhohlräume 18, 19 mittig unterteilen. Dabei sind die Gasinnendruckdüsen 3, 4 und 5, 6 jeweils auf den gegenüberliegenden Seiten der Trennbleche 41, 42 angeordnet. Weitere Gasinnendruckdüsen 7, 8 sind im dritten Teilformhohlraum 20 angeordnet.

An den Enden des Heißkanalverteilers 12 sind Heißkanaldüsen 9, 10 und 13, 14 angeordnet.

Bei dem in Fig. 1 gezeigten Verfahrensschritt erfolgt eine 100%ige Füllung der Längshohlräume 17, 21 und der Teilformhohlräume 18, 19, 20 mit einer druckbeaufschlagten schmelzflüssigen Kunststoffschmelze aus der Spritzgießmaschine 11 durch den Heißkanalverteiler 12 und die Heißkanaldüsen 13 und 14. Dabei werden in einem ersten Verfahrensschritt alle Formhohlräume zu 100% mit der fließfähigen Kunststoffschmelze ausgefüllt.

Wie in der Fig. 2 gezeigt, erfolgt in einem zweiten Verfahrensschritt nach Einsetzen des Erstarrens der Oberfläche des im ersten Verfahrensschritt gebildeten Kunststoffkörpers eine Einspritzung eines Fluids durch die Gasinnendruckdüsen 1 und 2 in die Längshohlräume 17 und 21, wodurch die schmelzflüssige Seele des Kunststoffmaterials aus den Längshohlräumen 17, 21 in Richtung des Heißkanalverteilers 12 ausgetrieben wird. Dieser Vorgang erfolgt solange, bis in den Längshohlräumen 17, 21 jewéils auf der gesamten Länge der Längsformhohlräume 17, 21 durchgehende Gaskanäle 30 entstanden sind. Dabei wird das überschüssige Material der Kunststoffschmelze in die Spritzgießmaschine bzw. in die Plastifiziereinheit der Spritzgießmaschine 11 zurückgedrängt.

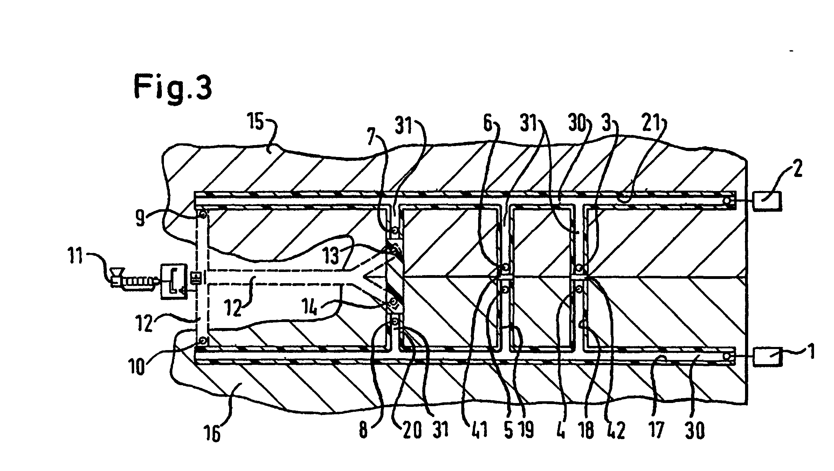

In einem dritten Verfahrensschritt, wie in der Fig. 3 gezeigt, wird nun durch die Gasinnendruckdüsen 3 bis 8 ein druckbeaufschlagtes Fluid in die Teilformhohlräume 18, 19, 20 eingebracht und die schmelzflüssige Seele aus diesen Teilformhohlräumen 18, 19, 20 in Richtung der bereits erstellten Gaskanäle 30 in die Längsformhohlräume 17 und 21 ausgetrieben. Wiederum erfolgt dieser Vorgang solange, bis die Teilformhohlräume 18, 19, 20 bis zu den bereits erstellten Gaskanälen 30 in den Längsformhohlräumen 17, 21 hohlgeblasen und auf diese Weise Gaskanäle 31 gebildet werden. Dabei lagert sich die schmelzflüssige Seele aus den Teilformhohlräumen 18, 19, 20 an den bereits erstarrten Wänden der Längsformhohlräume 17 bzw. 21 ab.

Nach dem Verdrängungsprozeß der schmelzflüssigen Seele aus den Teilformhohlräumen 18, 19, 20 wirkt der Gasdruck in den Gaskanälen 30 und 31 und damit im gesamten Formhohlraum des Formteiles als Nachdruck zum Schwindungsausgleich, bis das Formteil soweit abgekühlt ist, daß es entformt werden kann. Vor der Entformung ist es allerdings notwendig, den Gasdruck im Formteilinneren abzubauen, da sonst beim öffnen des Werkzeuges der Hohlkörper aufplatzt. Dies kann durch eine geeignete Gasrückführung und/oder Druckentlastung in die Umgebung erfolgen. Die Druckentlastung bzw. Gasrückführung und das Entformen erfolgt in der Art und Weise gemäß dem Stand der Technik.

## Patentansprüche

1. Verfahren zum Spritzgießen hohlgeblasener Kunststoffkörper, bei dem ein durch ein Werkzeug (15, 16) gebildeter, aus zumindest einem Haupt- (17, 21) und einem Nebenformhohlraum (18, 19, 20) bestehender Formhohlraum (17 bis 21) zuerst vollständig mit einer druckbeaufschlagten fließfähigen Kunststoffschmelze gefüllt wird, bevor gleichzeitig oder nach Einsetzen des Erstarrens der Kunststoffschmelze an den Wänden des Formhohlraumes in den Hauptformhohlraum (17, 21) ein druckbeaufschlagtes Fluid eingebracht wird und dabei die fließfähige Seele der Kunststoffschmelze aus diesem Hauptformhohlraum (17, 21) ausgetrieben wird und danach in den Nebenformhohlraum (18, 19, 20) ein druckbeaufschlagtes Fluid eingebracht wird, durch das die fließfähige Seele der Kunststoffschmelze aus dem Nebenformhohlraum (18, 19, 20) in den Hauptformhohlraum (17, 21) ausgetrieben wird, wo sich das noch fließfähige Material an den bereits erstarrten Wänden der im Hauptformhohlraum (17, 21) gebildeten Gaskanäle (30) absetzt.

2. Verfahren nach Anspruch 1, **dadurch gekennzeichnet, daß** beim Einbringen des druckbeaufschlagten Fluids in den Hauptformhohlraum (17, 21) die schmelzflüssige Seele in die Plastifiziereinheit der Spritzgußmaschine (11) zurückgedrängt wird.

3. Verfahren nach Anspruch 1 oder 2, **dadurch gekennzeichnet, daß** beim Einbringen des druckbeaufschlagten Fluids in den Hauptformhohlraum (17, 21) die schmelzflüssige Seele in dem Hauptformhohlraum (17, 21) in eine entformbare Nebenkavität ausgetrieben wird.

4. Verfahren nach einem der vorhergehenden Ansprüche, **dadurch gekennzeichnet, daß** das druckbeaufschlagte Fluid ein Gas ist, insbesondere Stickstoff.

5. Verwendung einer Vorrichtung, die die nachfolgenden Merkmale enthält, zur Durchführung des Verfahrens nach einem der vorhergehenden Ansprüche:
- einen durch ein Werkzeug (15, 16) gebildeten Formhohlraum (17 bis 21), der aus zumindest einem Hauptformhohlraum (17, 21) und zumindest einem Nebenformhohlraum (18, 19, 20) besteht, die miteinander verbunden sind,
- zumindest eine Düse (13, 14) zum Einbringen einer druckbeaufschlagten fließfähigen Kunststoffschmelze in den Formhohlraum (17 bis 21) mit der der Formhohlraum (17 bis 21) mit der Kunststoffschmelze vollständig füllbar ist,
- zumindest eine Düse (1, 2) zum Einbringen eines druckbeaufschlagten Fluids in den Hauptformhohlraum (17, 21), nachdem der Formhohlraum vollständig mit der Kunststoffschmelze gefüllt ist, mit der die schmelzflüssige Seele aus dem Hauptformhohlraum (17, 21) austreibbar ist, und
- zumindest eine weitere in Richtung des Hauptformhohlraums (17, 21) gerichtete Düse (3 bis 8) zum Einbringen eines druckbeaufschlagten Fluids in den Nebenformhohlraum (18, 19, 20) mit der die schmelzflüssige Seele der im Nebenformhohlraum befindlichen Kunststoffschmelze in den Hauptformhohlraum austreibbar ist, nachdem die schmelzflüssige Seele im Hauptformhohlraum (17, 21) ausgetrieben ist.

6. Verwendung nach Anspruch 5, **dadurch gekennzeichnet, daß** das Werkzeug (15, 16) ein mehrteiliges Werkzeug ist, in dem zumindest ein sich längs erstreckender Hauptformhohlraum (17, 21) und zumindest ein mit diesem Hauptformhohlraum (17, 21) verbundener, sich von diesem Hauptformhohlraum (17, 21) weg erstreckender Nebenformhohlraum (18, 19, 20) gebildet sind.

7. Verwendung nach Anspruch 6,**dadurch gekennzeichnet, daß** an dem Nebenformhohlraum (18, 19, 20) eine Gasdüse (3 bis 8) an dem der Verbindungsstelle zu dem Hauptformhohlraum (17, 21) entgegengesetzten Ende angeordnet ist.

8. Verwendung nach einem der Ansprüche 5 bis 7, **dadurch gekennzeichnet, daß** an einem Ende des Hauptformhohlraums (17, 21) eine Heißkanaldüse angeordnet ist, durch die die druckbeaufschlagte, fließfähige Kunststoffschmelze in den Hauptformhohlraum (17, 21) einbringbar ist und nachgeschaltet durch diese Heißkanaldüse ein druckbeaufschlagtes Fluid injizierbar ist.

9. Verwendung nach einem der Ansprüche 6 bis 8, **dadurch gekennzeichnet, daß** zwei oder mehr im wesentlichen parallel zueinander liegende Hauptformhohlräume (17, 21) durch eine Anzahl von Nebenformhohlräumen (18, 19, 20) miteinander verbunden sind und die Nebenformhohlräume (18, 19, 20) in ihrem mittleren Bereich durch Trennwände (41, 42) unterteilt sind, wobei auf jeder Seite der Trennwand (41, 42) eine Gasdüse (3, 4, 5, 6) angeordnet ist.

10. Verwendung nach einem der Ansprüche 5 bis 7 oder 9, **dadurch gekennzeichnet, daß** an dem einen Ende des Hauptformhohlraums (17, 21), das dem Ende mit der Düse zum Einbringen der Kunststoffschmelze gegenüberliegt, eine Gasinnendruckdüse (1, 2) angeordnet ist.

## Claims

1. Method for the injection molding of hollow-blown plastics material bodies, in which a die cavity (17 to 21), formed by a tool (15, 16) and consisting of at least one main (17, 21) and one secondary die cavity (18, 19, 20), is initially completely filled with a pressure-impacted free-flowing plastics material molten mass, before, at the same time as or after the start of solidifying of the plastics material molten mass on the walls of the die cavity, a pressure-impacted fluid is introduced into the main die cavity (17, 21) and the free-flowing core of the plastics material molten mass is therein expelled from this main die cavity (17, 21) and after this a pressure-impacted fluid is introduced into the secondary die cavity (18, 19, 20), by which the free-flowing core of the plastics material molten mass is expelled from the secondary die cavity (18, 19, 20) into the main die cavity (17, 21), where the still free-flowing material is deposited on the already solidified walls of the gas channels (30) formed in the main die cavity (17, 21).

2. Method according to claim 1, **characterised in that** when the pressure-impacted fluid is introduced into the main die cavity (17, 21) the molten core is pressed back into the plastifying unit of the injection molding machine (11).

3. Method according to claim 1 or 2, **characterised in that** when the pressure-impacted fluid is introduced into the main die cavity (17, 21) the molten core in the main die cavity (17, 21) is expelled into a secondary cavity which can be removed from the mold.

4. Method according to one of the preceding claims, **characterised in that** the pressure-impacted fluid is a gas, in particular nitrogen.

5. Use of a device containing the following features for carrying out the method according to one of the preceding claims:
- a die cavity (17 to 21) formed by a tool (15, 16), consisting of at least one main die cavity (17, 21) and at least one secondary die cavity (18, 19, 20), which are connected to one another,
- at least one nozzle (13, 14) for introducing a pressure-impacted free-flowing plastics material molten mass into the die cavity (17 to 21), with which the die cavity (17 to 21) can be completely filled with the plastics material molten mass,
- at least one nozzle (1, 2) for introducing a pressure-impacted fluid into the main die cavity (17, 21), after the die cavity has been completely filled with the plastics material molten mass, with which the molten core can be expelled from the main die cavity (17, 21) and
- at least one further nozzle (3 to 8) pointing in the direction of the main die cavity (17, 21) for introducing a pressure-impacted fluid into the secondary die cavity (18, 19, 20), with which the molten core of the plastics material molten mass located in the secondary die cavity can be expelled into the main die cavity, after the molten core in the main die cavity (17, 21) has been expelled.

6. Use according to claim 5, **characterised in that** the tool (15, 16) is a multi-part tool, in which at least one main die cavity (17, 21), extending longitudinally, and at least one secondary die cavity (18, 19, 20), connected to this main die cavity (17, 21) and extending away from this main die cavity (17, 21) are formed.

7. Use according to claim 6, **characterised in that** a gas nozzle (3 to 8) is arranged on the secondary die cavity (18, 19, 20) on the end opposite the connecting point to the main die cavity (17, 21).

8. Use according to one of claims 5 to 7, **characterised in that** at one end of the main die cavity (17, 21) a hot nozzle is arranged, through which the pressure-impacted, free-flowing plastics material molten mass can be introduced into the main die cavity (17, 21) and downstream a pressure-impacted fluid can be injected through this hot nozzle.

9. Use according to one of claims 6 to 8, **characterised in that** two or more main die cavities (17, 21), lying substantially parallel to one another, are connected to one another by a number of secondary die cavities (18, 19, 20) and the secondary die cavities (18, 19, 20) are divided in their central area by dividing walls (41, 42), wherein a gas nozzle (3, 4, 5, 6) is arranged on each side of the dividing wall (41, 42).

10. Use according to one of claims 5 to 7 or 9, **characterised in that** a gas-filled internal pressure nozzle (1, 2) is arranged at the end of the main die cavity (17, 21), which is opposite the end with the nozzle for introducing the plastics material molten mass.

## Revendications

1. Procédé pour le moulage par injection de corps en matière plastique soufflés creux, dans lequel une cavité de moulage (17 à 21) formée par un outil (15, 16) et constituée par au moins une cavité de moulage principale (17, 21) et par une cavité de moulage annexe (18, 19, 20) est tout d'abord entièrement remplie de matière plastique en fusion à l'état capable de s'écouler et mise sous pression, avant d'introduire simultanément, ou postérieurement à l'apparition du figeage de la matière plastique en fusion au niveau des parois de la cavité de moulage dans la cavité de moulage principale (17, 21), un fluide sous pression, et l'on chasse ainsi le coeur de la matière plastique en fusion à l'état capable de s'écouler hors de cette cavité de moulage principale (17, 21), et l'on introduit ensuite dans la cavité de moulage annexe (18, 19, 20) un fluide sous pression au moyen duquel le coeur de la matière plastique en fusion à l'état capable de s'écouler est chassé hors de la cavité de moulage annexe (18, 19, 20) jusque dans la cavité de moulage principale (17, 21), dans laquelle le matériau encore capable de s'écouler se dépose sur les parois déjà figées des canaux de gaz (30) formés dans la cavité de moulage principale (17, 21).

2. Procédé selon la revendication 1, **caractérisé en ce que** lors de l'introduction du fluide sous pression dans la cavité de moulage principale (17, 21), le coeur à l'état capable de s'écouler est forcé en retour dans l'unité de plastification de la machine de moulage par injection (11).

3. Procédé selon l'une ou l'autre des revendications 1 et 2, **caractérisé en ce que** lors de l'introduction du fluide sous pression dans la cavité de moulage principale (17, 21), le coeur à l'état capable de s'écouler présent dans la cavité de moulage principale (17, 21) est chassé dans une cavité annexe démoulable.

4. Procédé selon l'une des revendications précédentes, **caractérisé en ce que** le fluide sous pression est un gaz, en particulier de l'azote.

5. Utilisation d'un appareil qui contient les caractéristiques ci-après, pour la mise en oeuvre du procédé selon l'une des revendications précédentes :
- une cavité de moulage (17 à 21) formée par un outil (15, 16) et constituée d'au moins une cavité de moulage principale (17, 21) et d'au moins une cavité de moulage annexe (18, 19, 20), lesquelles sont reliées les unes aux autres,
- au moins une buse (13, 14) pour introduire de la matière plastique en fusion à l'état capable de s'écouler et mise sous pression jusque dans la cavité de moulage (17 à 21), avec laquelle la cavité de moulage (17 à 21) est susceptible d'être totalement remplie avec la matière plastique en fusion,
- au moins une buse (1, 2) pour introduire un fluide sous pression dans la cavité de moulage principale (17, 21) après avoir rempli la cavité de moulage entièrement avec la matière plastique en fusion, avec laquelle le coeur à l'état capable de s'écouler peut être chassé hors de la cavité de moulage principale (17, 21), et
- au moins une autre buse (3 à 8) dirigée en direction de la cavité de moulage principale (17, 21) pour introduire un fluide sous pression dans la cavité de moulage annexe (18, 19, 20), avec laquelle le coeur à l'état capable de s'écouler de la matière plastique en fusion qui se trouve dans la cavité de moulage annexe peut être chassé jusque dans la cavité de moulage principale après que le coeur à l'état capable de s'écouler présent dans la cavité de moulage principale (17, 21) a été chassé.

6. Utilisation selon la revendication 5, **caractérisée en ce que** l'outil (15, 16) est un outil en plusieurs parties, dans lequel sont formées au moins une cavité de moulage principale (17, 21) s'étendant longitudinalement et au moins une cavité de moulage annexe (18, 19, 20) reliée à cette cavité de moulage principale (17, 21) et s'étendant en éloignement de cette cavité de moulage principale (17, 21).

7. Utilisation selon la revendication 6, **caractérisée en ce qu'**une buse à gaz (3 à 8) est agencée au niveau de la cavité de moulage annexe (18, 19, 20), à l'extrémité opposée à l'emplacement de liaison vers la cavité de moulage principale (17, 21).

8. Utilisation selon l'une des revendications 5 à 7, **caractérisée en ce qu'**une buse à canal chauffé est agencée à une extrémité de la cavité de moulage principale (17, 21), au moyen de laquelle la matière plastique en fusion dans un état capable de s'écouler et mise sous pression peut être introduite dans la cavité de moulage principale (17, 21), et un fluide soumis à une pression est susceptible d'être injecté consécutivement via cette buse à canal chauffé.

9. Utilisation selon l'une des revendications 6 à 8, **caractérisée en ce que** deux ou plusieurs cavités de moulage principales (17, 21) situées sensiblement parallèlement l'une à l'autre sont reliées les unes aux autres par un certain nombre de cavités de moulage annexes (18, 19, 20), **en ce que** les cavités de moulage annexes (18, 19, 20) sont subdivisées dans leur région médiane par des parois de séparation (41, 42), et **en ce qu'**une buse à gaz (3, 4, 5, 6) est agencée sur chaque côté de la paroi de séparation (41, 42).

10. Utilisation selon l'une des revendications 5 à 7 ou 9, **caractérisée en ce qu'**une buse à gaz à pression intérieure (1, 2) est agencée à l'extrémité de la cavité de moulage principale (17, 21) qui est opposée à l'extrémité équipée de la buse pour l'introduction de la matière plastique en fusion.
